Europäisches Patentamt

European Patent Office

Office européen des brevets

(11) Numéro de publication: **0 573 115 A1**

## DEMANDE DE BREVET EUROPEEN

(21) Numéro de dépôt: **93201547.2**

(22) Date de dépôt: **01.06.93**

(51) Int. Cl.5: **G06F 15/68**

(30) Priorité: **03.06.92 FR 9206724**

(43) Date de publication de la demande:
**08.12.93 Bulletin 93/49**

(84) Etats contractants désignés:
**DE FR GB**

(71) Demandeur: **LABORATOIRES D'ELECTRONIOUE PHILIPS**
**22, Avenue Descartes**
**F-94450 Limeil-Brévannes(FR)**
(84) **FR**

(71) Demandeur: **PHILIPS ELECTRONICS N.V.**
**Groenewoudseweg 1**
**NL-5621 BA Eindhoven(NL)**
(84) **DE GB**

(72) Inventeur: **Florent, Raoul, Société Civile S.P.I.D.**
**156 Boulevard Haussmann**
**F-75008 Paris(FR)**

(74) Mandataire: **Lottin, Claudine et al**
**Société Civile S.P.I.D.**
**156, Boulevard Haussmann**
**F-75008 Paris (FR)**

(54) **Dispositif de traitement d'images du type extracteur de contour et senseur de terre comprenant un tel extracteur.**

(57) Dispositif de traitement d'image du type extracteur de contour, pour délivrer les coordonnées des pixels situés à la transition fond-objet dans l'image numérisée d'un objet sur un fond uniforme, ce dispositif comprenant : des moyens de définition d'une pluralité de lignes de traitement (X'X, Y'Y, T'T, Z'Z), balayant l'image à traiter et coupant la transition fond-objet, des moyens d'évaluation (FL, LUT), pour chaque pixel courant de chaque ligne de traitement, d'un critère C qui est une fonction du niveau de luminance de ce pixel, et des moyens de détermination (MAX) du maximum ($C_{MAX}$)dudit critère C pour chaque ligne de traitement, et des moyens de sélection (MEM) des pixels qui correspondent aux maxima du critère C pour toutes les lignes, et de stockage de leurs coordonnées (i,j), en tant que pixels extraits, et ce dispositif comprenant en outre, dans les moyens d'évaluation du critère C, des chaînes de traitement (1...n) ayant respectivement des moyens de calcul de grandeurs relatives aux variations du niveau de luminance des pixels, dans des ensembles associés respectivement à chaque pixel courant et composés chacun d'un nombre ([m],[p]) donné de pixels adjacents ordonnés sur la même ligne de traitement que le pixel courant, et à partir de ce dernier, soit en direction de l'objet, soit en direction du fond de l'image, et des moyens d'addition (ADD) de ces grandeurs.

Applications :    Télécommunications
                        Imagerie médicale

EP 0 573 115 A1

FIG. 3

L'invention concerne un dispositif de traitement d'image du type extracteur de contour, pour délivrer les coordonnées de pixels extraits situés à la transition fond-objet dans une image qui représente un objet sur un fond substantiellement uniforme, et qui est constituée de pixels (P(i,j)) repérés par leurs coordonnées (i,j) dans un référentiel matriciel et affectés chacun d'un niveau de luminance.

L'invention concerne particulièrement un senseur de Terre, pour être embarqué sur un engin spatial, comprenant un extracteur pour l'extraction du contour du disque terrestre vu de l'engin, un identificateur du centre du disque terrestre et des moyens d'orientation de l'engin spatial par rapport à l'axe engin-centre de la Terre.

L'invention trouve son application dans le domaine des télécommunications, pour réaliser des senseurs de Terre capables d'orienter des satellites artificiels par rapport à l'axe satellite-centre de la Terre, dans le but de viser des antennes d'émission-réception, et d'améliorer ainsi la transmission d'informations qui transitent d'une région à une autre de la Terre, via ces satellites artificiels.

Un senseur d'horizon terrestre est déjà connu du brevet européen EP 405 678 AI. Ce dispositif connu utilise des éléments photosensibles à transfert de charges (CCD) pour détecter les transitions entre la Terre et l'Espace sur une image. Il met en oeuvre, dans le domaine allant du proche infra-rouge à l'ultraviolet (visible), le rayonnement solaire diffusé par l'atmosphère terrestre. Le dispositif connu permet la détermination du centre de la Terre. A cet effet, les éléments photosensibles à transfert de charges sont constitués en une matrice bidimensionnelle de détecteurs élémentaires. Des moyens de lecture déterminent les coordonnées des détecteurs élémentaires situés aux transitions Terre-Espace, puis des moyens de calcul déduisent la position du centre de la Terre dans le référentiel de la matrice.

Ainsi, à l'aide d'une optique de focalisation connue en soi, on forme une image de la Terre, ou de son halo, sur une matrice d'éléments photosensibles à transfert de charge (CCD) composée d'un très grand nombre de détecteurs élémentaires disposés selon un arrangement régulier de lignes et de colonnes. La matrice est lue ligne par ligne.

Les signaux provenant du registre de sortie de la matrice sont analysés par un circuit de comparaison comprenant deux seuils. Le circuit de comparaison ne retient les coordonnés d'un élément photosensible donné que si le signal correspondant est compris entre les deux seuils, ce qui permet de détecter les transitions entre l'Espace et la Terre, et donc d'obtenir le contour de la Terre au moyen de ces seuillages.

Après avoir été stockées en mémoire, les coordonnées des points de transition Terre-Espace sont traitées par une méthode de moindres carrés des coordonnées du centre du cercle passant au mieux par ces points de transition.

L'orientation des satellites artificiels est un problème important car ces satellites sont destinés à recevoir et à transmettre des signaux terrestres. Il faut donc qu'ils puissent viser les antennes terrestres avec une grande précision. Meilleure sera la précision, plus puissante sera la réception par les antennes terrestres.

On cherche à atteindre, au moyen du dispositif selon l'invention, une précision de 1 à quelques kilomètres au sol. En matière de précision, cette spécification s'évalue en degrés. Un but de l'invention est de fournir un senseur de Terre capable de déterminer le centre de la Terre à quelques 1/100 de degré près, par exemple 1 à 5 centième de degré, afin d'obtenir la position de l'axe satellite-centre de la Terre avec cette même précision.

Une autre spécification relative au senseur de Terre concerne la fréquence ou autrement dit la cadence à laquelle le senseur peut fournir les mesures relatives aux coordonnées du centre de la Terre. Donc, un autre but de l'invention est de fournir un senseur de Terre capable de fournir des mesures relatives aux coordonnées du centre de la Terre à intervalles de temps réguliers et rapprochés.

Une autre spécification concerne la réalisation matérielle du senseur de Terre. Ce dispositif doit pouvoir être réalisé au moyen d'éléments physiques appropriés à être satellisés, c'est-à-dire peu encombrants et très fiables.

Une autre spécification relative au senseur de Terre concerne le domaine de longueurs d'onde dans lequel le senseur d'horizon doit travailler. Le senseur d'horizon connu de l'état de la technique inclut une matrice d'éléments photosensibles à transfert de charges qui travaille dans le visible. Cet agencement présente un avantage sur un éventuel dispositif qui travaillerait dans l'infra-rouge. En effet, dans le domaine des longueurs d'onde infrarouges, l'homme du métier ne sait pas réaliser de matrices, mais seulement des senseurs à 1, ou quelques pixels, auxquels on adjoint des moyens mécaniques pour que le ou les pixel(s) balaye(nt) la totalité de l'image à étudier. Ces moyens mécaniques pour réaliser le balayage d'une image par un senseur à 1 pixel ou quelques pixels sont extrordinairement lourds et compliqués, donc peu favorables à une satellisation. Un autre but de l'invention est donc de fournir un senseur de Terre travaillant dans le domaine des longueurs d'onde visibles avec des matrices d'éléments photosensibles, par exemple du type à transfert de charges.

En résumé, le senseur de Terre selon l'invention doit répondre aux spécifications posées de précision, de cadence, et de compacité et fiabilité du matériel.

Ce but est atteint au moyen d'un dispositif de traitement d' image du type extracteur de contour, pour délivrer les coordonnées de pixels extraits situés à la transition fond-objet dans une image qui représente un objet sur un fond substantiellement uniforme, et qui est constituée de pixels ($P(i,j)$) repérés par leurs coordonnées ($i,j$) dans un référentiel matriciel et affectés chacun d'un niveau de luminance, ce dispositif comprenant :

- des moyens de définition d'une pluralité de lignes de traitement (X'X, Y'Y, T'T, Z'Z), balayant l'image à traiter et coupant la transition fond-objet,
- des moyens d'évaluation (FL, LUT), pour chaque pixel courant de chaque ligne de traitement, d'un critère C qui est une fonction du niveau de luminance de ce pixel,
- des moyens de détermination (MAX) du maximum ($C_{MAX}$)dudit critère C pour chaque ligne de traitement, et des moyens de sélection (MEM) des pixels qui correspondent aux maxima du critère C pour toutes les lignes, et de stockage de leurs coordonnées ($i,j$), en tant que pixels extraits, et ce dispositif comprenant en outre, dans les moyens d'évaluation du critère C :
- des chaînes de traitement (1...n) ayant respectivement des moyens de calcul de grandeurs relatives aux variations du niveau de luminance des pixels, dans des ensembles associés respectivement à chaque pixel courant et composés chacun d'un nombre ([m],[p]) donné de pixels adjacents ordonnés sur la même ligne de traitement que le pixel courant, et à partir de ce dernier, soit en direction de l'objet, soit en direction du fond de l'image,
- et des moyens d'addition (ADD) de ces grandeurs.

Dans une mise en oeuvre, ce dispositif est caractérisé en ce que les moyens d'évaluation du critère C comprennent :

- au moins une chaîne de traitement (1,2) ayant des moyens de calcul pour fournir des mesures relatives à l'uniformité du niveau de luminance des pixels dans des ensembles associés respectivement à chaque pixel courant et composés chacun d'un nombre ([m1],[m2]) donné de pixels adjacents ordonnés sur la même ligne de traitement que le pixel courant, et à partir de ce dernier, en direction du fond de l'image,
- et au moins une chaîne de traitement (3,4) ayant des moyens de calcul pour fournir des mesures relatives à l'augmentation du niveau de luminance des pixels dans des ensembles associés respectivement à chaque pixel courant et composés chacun d'un nombre ([p]) donné de pixels adjacents ordonnés sur la même ligne de traitement que le pixel courant, et à partir de ce dernier, soit en direction du fond de l'image, soit en direction de l'objet,

les résultats des calculs effectués par les différentes chaînes étant fournis aux moyens d'addition (ADD).

Dans une mise en oeuvre, ce dispositif est caractérisé en ce que les moyens d'évaluation du critère C comprennent :

- une première chaîne de traitement (1), dans laquelle des mesures relatives à l'uniformité sont obtenues par des moyens de calcul (FL1, LUT1) de la moyenne pondérée ($k1.M[m1]$) d'un signal (I-($i,j$)) fonction des valeurs de luminance des pixels de dits premiers ensembles associés respectivement à chaque pixel courant et composés chacun d'un premier nombre ([m1]) de pixels adjacents ordonnés sur la même ligne de traitement que le pixel courant, et à partir de ce dernier, en direction du fond de l'image,
- une seconde chaîne de traitement (2), dans laquelle des mesures relatives à l'uniformité sont obtenues par des moyens de calcul (FL2, LUT2) de la moyenne pondérée ($k2.M[m2]$) d'un signal (I-($i,j$)) fonction des valeurs de luminance des pixels de dits seconds ensembles associés respectivement à chaque pixel courant et composés chacun d'un second nombre ([m2]) de pixels adjacents ordonnés sur la même ligne de traitement que le pixel courant, et à partir de ce dernier, en direction du fond de l'image, le second nombre ([m2]) de pixels des seconds ensembles étant supérieur au premier nombre ([m1]) de pixels des premiers ensembles,
- une troisième chaîne de traitement dans laquelle des mesures relatives à l'augmentation du niveau de luminance sont obtenues par des moyens de calcul (FL3, LUT3) de la dérivée ($P[p1]$) d'un signal ($I(ij)$) fonction des valeurs de luminance des pixels de dits troisièmes ensembles associés respectivement à chaque pixel courant, composés chacun d'un troisième nombre [p1] de pixels adjacents ordonnés sur la même ligne de traitement que le pixel courant et à partir de ce dernier en direction de l'objet.

Dans une mise en oeuvre, ce dispositif est caractérisé en ce que les moyens d'évaluation du critère C comprennent en outre:

- une quatrième chaîne de traitement dans laquelle les mesures relatives à l'augmentation du niveau de luminance sont obenues par des moyens (FL4, LUT4) de calcul de la dérivée ($P[p2]$) d'un signal ($I(ij)$)

fonction des valeurs de luminance des pixels dedits quatrièmes ensembles associés respectivement à chaque pixel courant, composés chacun d'un quatrième nombre [p2] de pixels adjacents ordonnés sur la même ligne de traitement que le pixel courant, et à partir de ce dernier en direction du fond de l'image, le quatrième nombre ([p2]) de pixels des quatrièmes ensembles étant éventuellement égal au troisième nombre de pixels ([p1]) des troisièmes ensembles.

Dans une mise en oeuvre, ce dispositif est caractérisé en ce que dans chaque chaîne, les moyens de calcul comprennent respectivement :

- un filtre linéaire (FL1, FL2, FL3, FL4) qui mesure les variations des valeurs de luminance dans les ensembles de pixels associés à chaque pixel courant, et qui a pour étendue un nombre de pixels correspondant au nombre de pixels contenus dans ces ensembles,
- des moyens de tabulation (LUT1, LUT2, LUT3, LUT4) (ou tables de codage) qui appliquent une fonction scalaire (f) sur chaque sortie des filtres linéaires pour doser les différentes mesures effectuées par les filtres linéaires,

les résultats des calculs effectués par les moyens de tabulation étant fournis aux moyens d'addition (ADD).

Dans une mise en oeuvre, ce dispositif est caractérisé en ce que:

- dans la première chaîne, le filtre linéaire (FL1) a une petite étendue ([m1]) par exemple 1 à 5 pixels et dans la deuxième chaîne une grande étendue ([m2]) par exemple 10 à 30 pixels,
- dans la troisième, et éventuellement dans la quatrième chaîne, le(s) filtre(s) linéaire(s) (FL3, FL4), a (ont) une petite étendue ([p1], [p2]) par exemple 1 à 5 pixels.

L'invention est décrite ci-après en détail, en référence avec les figures schématiques annexées dont :

- la figure 1 montre un système optique d'un senseur de Terre ;
- la figure 2 montre une matrice d'éléments photosensibles liée au système optique ;
- la figure 3 montre l'extracteur de contour représenté schématiquement par des blocs fonctionnels ;
- la figure 4 montre très schématiquement une image du disque terrestre sur fond d'espace sidéral, obtenue en niveaux de gris au moyen d'une matrice d'éléments photosensibles dans le visible, telle que celle de la figure 2 ;
- la figure 5 montre les quatre axes parallèlement auxquels des moyens de lectures effectuent le balayage d'une image du disque terrestre telle que celle de la figure 4 ;
- la figure 6a montre les points du contour terrestre droit obtenus par l'extracteur selon l'invention lors d'un balayage horizontal de la droite vers la gauche, parallèlement à un axe Y'Y ;
- la figure 6b montre les points du contour terrestre gauche obtenus par l'extracteur selon l'invention lors d'un balayage horizontal de la gauche vers la droite, parallèlement à axe X'X ;
- la figure 6c montre les points du contour haut obtenus lors d'un balayage vertical parallèlement à un axe T'T et la figure 6d ceux du contour bas obtenus lors d'un balayage vertical parallèlement à un axe Z'Z ;
- la figure 7a montre les points extraits du disque terrestre de la figure 4, au moyen de l'extracteur connu de l'état de la technique, pour obtenir le contour ;
- la figure 7b montre les points extraits du disque terrestre de la figure 4, au moyen de l'extracteur selon l'invention, pour obtenir le contour ;
- les figures 8 montrent l'extraction du contour du disque terrestre de la figure 4, lorsque les balayages sont faits seulement horizontalement :
  . la figure 8a avec un seul petit support pour l'évaluation de la moyenne, ce support couvrant 2 pixels,
  . la figure 8b avec un seul grand support pour l'évaluation de la moyenne, ce support couvrant 30 pixels,
  . la figure 8c avec deux supports pour l'évaluation de deux moyennes, l'un couvrant 2 pixels, l'autre 30 pixels ;

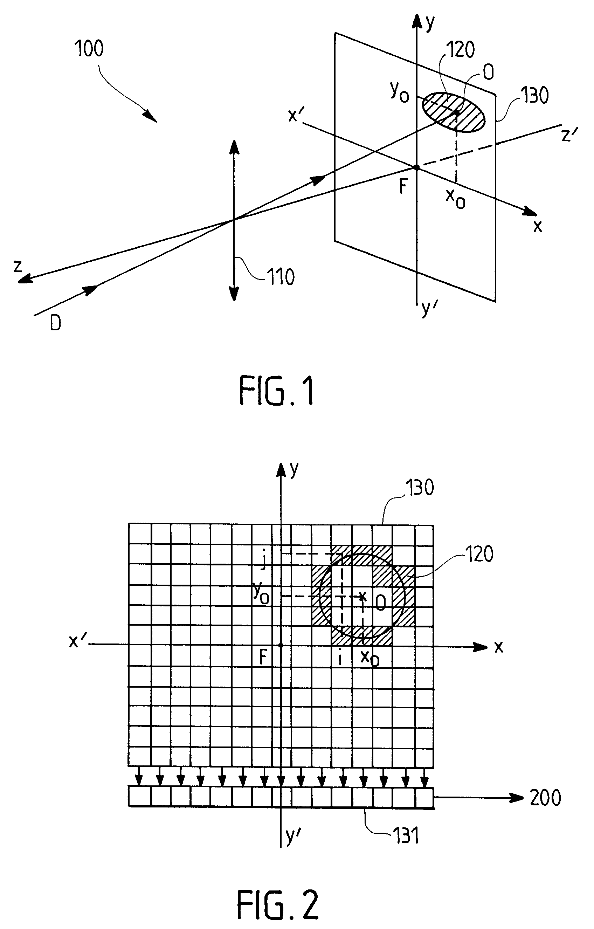

La figure 1 montre de façon schématique un viseur 100 d'horizon terrestre comportant un système optique 110 de focalisation comprenant au moins un objectif, destiné à focaliser le rayonnement solaire réfléchi par la Terre et diffusé par l'atmosphère terrestre de façon à former, dans le plan focal F du viseur 100, une image 120 de la Terre et de son halo.

Un filtre optique non représenté permet de limiter le rayonnement reçu par le viseur à une bande spectrale du domaine du visible, comprise sensiblement entre 0, 3 et 1 $\mu$m.

Le senseur de Terre selon l'invention inclut par exemple un tel viseur d'horizon terrestre et a pour fonction de déterminer l'axe D senseur-centre de la Terre, de manière à permettre l'orientation d'un engin spatial à bord duquel est embarqué ledit senseur, par rapport à cet axe D.

La figure 2 montre que la recherche de la position de l'image du centre O de la Terre dans le plan focal F de l'objectif est réalisé en utilisant une matrice 130 d'éléments photosensibles par exemple à transfert de charges (CCD), telle qu'une matrice TH786 de Thomson-CSF.

La matrice 130 est lue en transférant séquentiellement ligne par ligne, ou bien colonne par colonne les signaux fournis par les éléments photosensibles dans un registre de sortie 131. Les lignes de la matrice sont parallèles à l'axe x'x, et les colonnes sont parallèles à y'y. Le foyer F du système optique est sur l'axe z'z.

Le contenu du registre de sortie est à son tour transféré vers des moyens 200 d'extraction dans le but de déterminer les coordonnées i, j des éléments photosensibles marqués en gris sur la figure 2 situés aux transitions Terre-Espace.

Le dispositif connu de l'état de la technique analysait les signaux correspondant à chaque élément photosensible et ne retenait les coordonnées i, j d'un élément photosensible donné que si le signal correspondant était situé entre deux seuils de discrimination.

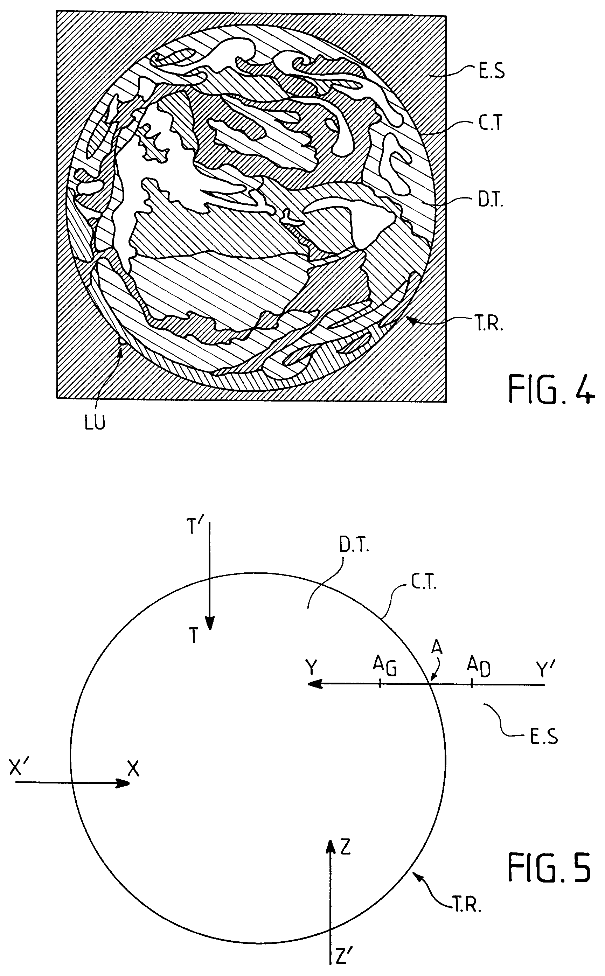

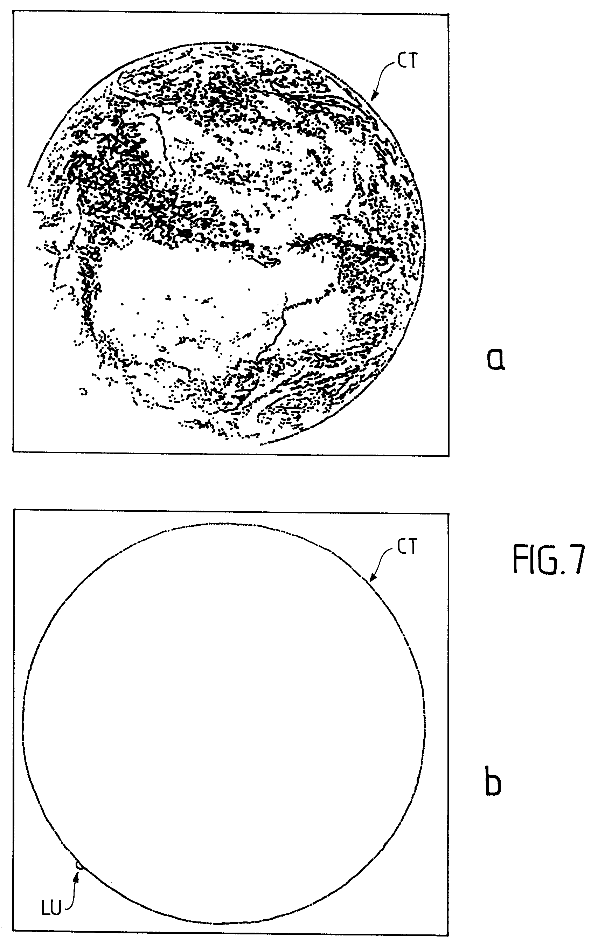

Malheureusement, par le moyen du dispositif connu, on réalisait non seulement l'extraction du contour de la Terre, mais aussi celle des continents à l'intérieur de l'image du disque terrestre, ce qui résultait en de nombreux points extraits correspondant à l'intérieur du disque terrestre, comme montré sur la figure 7a. En effet, comme il ressort de l'examen de la représentation schématique de l'image originale du disque terrestre, telle que montrée sur la figure 4, il existe, à l'intérieur du disque terrestre DT des transitions très fortes qui ressemblent à la transition CT Terre-Espace sidéral et qui sont donc détectées par un extracteur de contour conventionnel de la même façon que la périphérie CT de la Terre. De plus, au moyen du dispositif connu, on constatait que l'on ne pouvait extraire en général que les trois-quarts de la périphérie de la Terre (voir la figure 7a en bas à gauche), le quatrième quart étant mal illuminé par le Soleil. Pour extraire le quatrième quart, il fallait alors baisser les seuils de discrimination, ce qui résultait dans le fait que l'on extrayait dans ce cas beaucoup trop d'informations non voulues appartenant à l'intérieur du disque terrestre, et que le résultat devenait non exploitable. En outre, l'ajustement desdits seuils était délicat, c'est-à-dire difficile à réaliser, alors que cet ajustement déterminait pourtant en grande partie les performances de l'extraction.

L'invention propose un extracteur de contour, utilisable dans un senseur de Terre, pour fournir les coordonnées i, j des points P(i,j) de l'image du disque terrestre situés à la périphérie CT de ce disque DT, qui est capable de s'affranchir pratiquement complètement des informations relatives aux points situés à l'intérieur du disque, et qui fournit en outre davantage d'informations sur ladite périphérie que ne le faisait le système connu de l'état de la technique. Un résultat obtenu au moyen de l'extracteur selon l'invention est montré à titre d'exemple sur la figure 7b. On peut constater qu'au moyen de cet extracteur la totalité de la périphérie CT du disque terrestre DT est extraite au lieu de seulement des trois-quarts comme cela était antérieurement le cas tel qu'illustré par la figure 7a.

Ce dispositif d'extraction remplit en outre les trois conditions exposées précédemment de précision, cadence, et fiabilité et compacité.

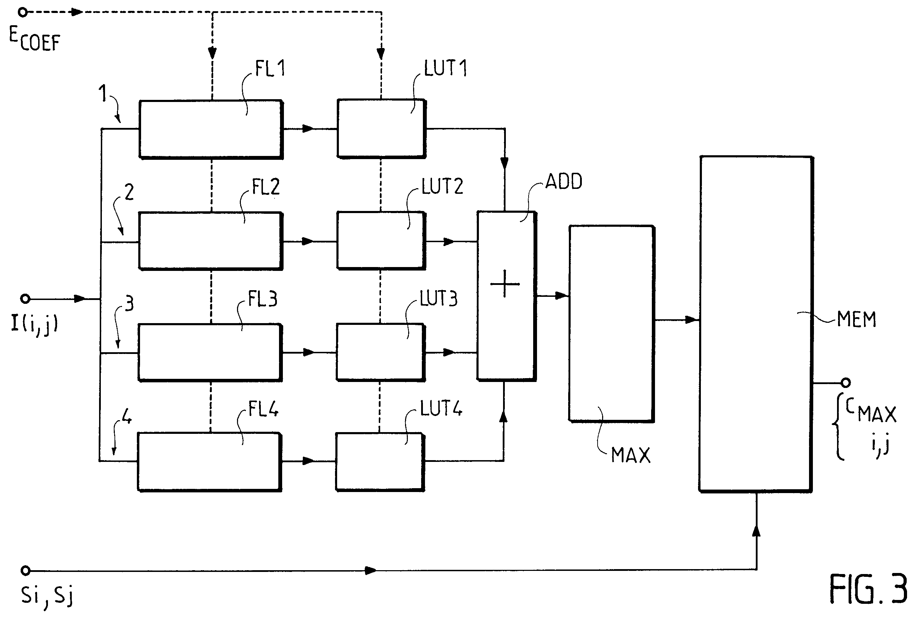

Ce dispositif d'extraction met en oeuvre différentes fonctions qui s'enchaînent selon l'algorithme représenté par le schéma de la figure 3.

Les résultats disponibles à la sortie du dispositif d'extraction sont portés à l'entrée d'un dispositif d'identification qui est amélioré par rapport à celui qui était connu de l'état de la technique cité.

D'une manière générale, l'invention concerne un dispositif de traitement d'image du type extracteur de contour, pour délivrer les coordonnées de pixels extraits situés à la transition fond-objet dans une image qui représente un objet sur un fond substantiellement uniforme, et qui est constituée de pixels P(i,j) repérés par leurs coordonnées (i,j) dans un référentiel matriciel et affectés chacun d'un niveau de luminance.

Dans l'exemple de mise en oeuvre de l'invention décrit ci-après, les niveaux de luminance sont distribués sur une échelle de niveaux de gris.

Le dispositif d'extraction selon l'invention traite tous les pixels de l'image représentée schématiquement sur la figure 4 telle qu'obtenue au moyen de la matrice d'éléments photosensibles représentée sur la figure 2. Sur la figure 4, les hachures sont d'autant plus serrées que la zone hachurée est foncée, c'est-à-dire que le niveau de gris est bas. La figure 4 a été simplifiée à 4 niveaux de gris. En réalité, on opère généralement sur des images ayant un plus grand nombre de niveaux de gris.

L'extraction doit être une opération simple, efficace, et rapide. A l'aide de l'extraction, on tente d'aboutir à un petit nombre de points : en l'occurrence, le but de l'extraction est de fournir l'indication de tous les pixels, à l'exclusion notamment des pixels qui correspondraient soit à l'Espace ES, soit à l'intérieur du disque terrestre, DT.

L'identification, qui sera l'étape ultérieure, dépendra étroitement de l'extraction : plus il existera de points non pertinents, c'est-à-dire n'appartenant pas à la périphérie CT, dans les résultats de l'extracteur, plus l'identification, qui fournit les coordonnées $x_o$ $y_o$ du centre O de la Terre à partir de ces résultats, sera difficile, fastidieuse et peu robuste.

Le but de l'extraction est donc d'une part de s'affranchir des informations non pertinentes et gênantes provenant de l'espace intersidéral ES autour de la Terre, et de celles provenant de l'intérieur du disque terrestre DT.

Dans l'espace intersidéral ES, les informations gênantes proviennent notamment du Soleil qui à certaines heures se trouve proche de la Terre, presque à la périphérie et qui peut saturer les éléments photosensibles dans une direction de vidage de la matrice et dans les deux sens, c'est-à-dire à la fois vers le haut et vers le bas d'une colonne. D'autre part, la lune, LU, ou tout autre astre, peut aussi apporter une contribution gênante.

Dans le disque terrestre, DT, les informations gênantes peuvent provenir des îles et continents, et des perturbations atmosphériques, les transitions océan-continent, ou océan-nuage, ou continent-nuage, apportant une contribution très forte, comme il ressort de l'observation de l'image originale représentée sur la figure 4, qui montre de nombreux niveaux de gris différents.

Pour atteindre aux buts de l'invention, c'est-à-dire déterminer les coordonnées $x_o$, $y_o$ du centre O de la Terre, il est impératif de s'affranchir de toutes les données autres que celles qui sont relatives à la périphérie CT du disque terrestre DT.

On veut donc d'abord améliorer le rapport signal sur bruit par rapport à l'extracteur connu de l'état de la technique. On conçoit le bruit comme correspondant aux points détectés hors de la périphérie CT du disque terrestre et le signal comme correspondant aux points de sa périphérie CT.

On veut aussi proposer un extracteur qui soit issu d'un traitement où l'on considère la matrice de pixels de la figure 2 ligne par ligne ou bien colonne par colonne, et non pas lignes et colonnes en même temps, ceci dans un souci de simplicité cadrant avec une des conditions énoncées plus haut stipulant la compacité du dispositif embarquable.

Un tel dispositif pourra donc s'affranchir des filtres bidimensionnels qui font intervenir les lignes et les colonnes en même temps et réalisera un traitement à la fois extrêmement simple et extrêmement performant comme il sera exposé ci-après.

De plus, il est utile de réaliser le traitement de l'image selon des lignes droites parallèles aux lignes et aux colonnes de la matrice, bien que cela ne soit pas obligatoire.

L'extracteur selon l'invention traite donc les données d'une matrice telle que celle de la figure 2, ligne par ligne, de la gauche vers la droite parallèlement à $\overrightarrow{XX}$, puis de la droite vers la gauche parallèlement à $\overrightarrow{YY}$; ensuite colonne par colonne de bas en haut parallèlement à $\overrightarrow{ZZ}$ puis de haut en bas parallèlement à $\overrightarrow{TT}$ selon les directions montrées sur la figure 5 par rapport au disque terrestre DT.

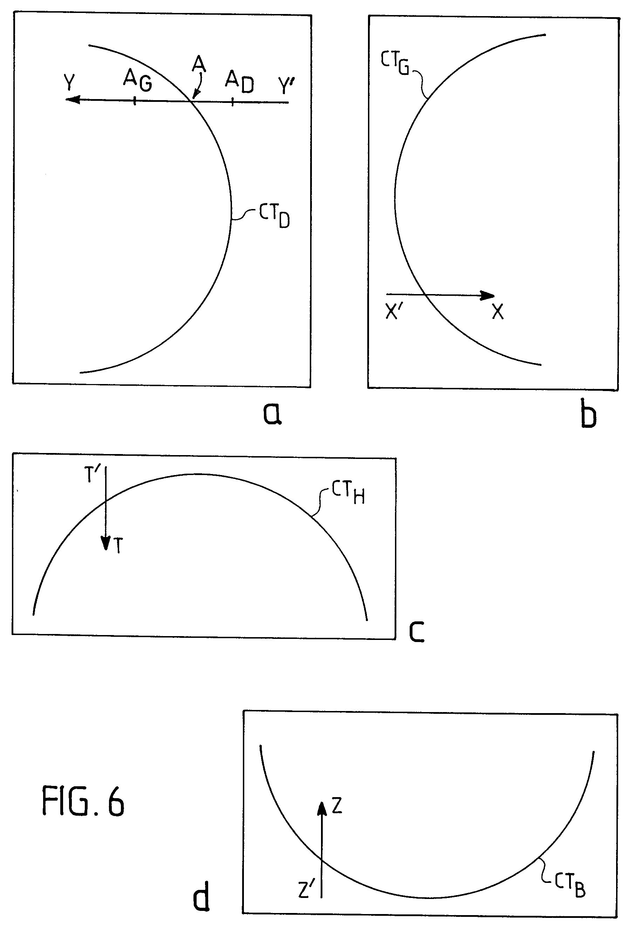

Le présent exposé va énoncer les opérations à réaliser lors du traitement des lignes, c'est-à-dire les opérations à réaliser lors du traitement du signal correspondant aux pixels de la matrice dans une direction horizontale, et dans le sens de la droite vers la gauche parallèlement à l'axe $\overrightarrow{YY}$ de la figure 5, comme montré sur la figure 6a.

Il faut entendre que ce que l'on dira relativement à cet axe, pourra être étendu aux opérations à réaliser relativement aux trois autres axes montrés sur les figure 5, et 6b, 6c, 6d, c'est-à-dire $\overrightarrow{XX}$, $\overrightarrow{TT}$, $\overrightarrow{ZZ}$.

Lorsque l'on considère l'un après l'autre les pixels situés sur un axe $\overrightarrow{YY}$ comme montré sur la figure 5, et sur la figure 6a, c'est-à-dire lorsqu'on se déplace sur une ligne horizontale de la droite vers la gauche de l'image, en s'éloignant de l'espace sidéral pour se diriger vers le centre du disque terrestre et en traversant le contour $CT_D$ du disque terrestre DT en un point A, on doit rencontrer normalement d'abord des pixels $A_D$ correspondant à l'espace intersidéral ES, puis un pixel A correspondant au contour $CT_D$ de la Terre TR, puis des pixels $A_G$ à l'intérieur du disque terrestre DT.

En référence avec la figure 5 et avec la figure 6a, au point A de contour à droite $CT_D$ de l'image du disque terrestre, on doit donc trouver le signal recherché, c'est-à-dire le signal Terre. On ne prendra en compte aucun modèle d'atmosphère pour ce signal, toujours par souci de simplicité et de robustesse, car un signal correspondant à l'atmosphère est extrêmement variable. On constate néanmoins, que, à gauche du contour droit de la Terre, par exemple au point $A_G$. l'intensité du signal de luminance des pixels sur une ligne horizontale $\overrightarrow{YY}$ croît rapidement lorsque l'on se déplace sur $\overrightarrow{YY}$ pour aller de A vers $A_G$ situé dans le disque terrestre DT. Si l'on considère le signal en terme de niveaux de gris, on constate que l'on a une pente P importante des niveaux de gris (ou dérivée du signal).

Par contre à la droite du point A situé sur le contour, les pixels tels que $A_D$ correspondent au noir sidéral, et on relève purement du bruit que l'on va caractériser au premier ordre, toujours dans un souci de simplicité. Selon l'invention, on va caractériser le bruit correspondant au noir sidéral par sa moyenne M. Donc à droite du pixel correspondant au contour, on trouve des pixels $A_D$ dont le signal est en moyenne faible.

On va donc analyser le signal de chaque pixel d'une ligne, de la droite vers la gauche horizontalement, et considérer, avec des moyens de calcul, la moyenne M du signal à droite du pixel (vers l'espace sidéral), et la pente P du signal à gauche du même pixel (vers le centre du disque terrestre). Et on postulera que le pixel correspondant précisément au contour droit CT du disque terrestre DT est celui A pour lequel le signal maximise un critère C qui rend compte de la moyenne à droite $M_D$ et de la pente à gauche $P_G$.

Pour le pixel correspondant à ce bord droit $CT_D$ du disque terrestre, sur la ligne horizontale parallèle à $\overrightarrow{Y'Y}$, la moyenne à droite $M_D$ sera faible et la pente à gauche $P_G$ sera grande.

Du fait que l'on décide de retenir le signal qui correspond au maximum d'un critère qui prend en compte ces deux aspects, il en résultera que le pixel correspondant au maximum, c'est-à-dire le point extrait, A, sera unique sur la ligne horizontale considérée relativement au bord droit $CT_D$ du disque terrestre.

En référence avec les figures 6a à 6d, pour chaque ligne et chaque colonne traitée dans chaque sens, on obtiendra un point et un seul. Dès le moment où l'on définit le nombre de lignes et de colonnes traitées, on sait déjà combien de points extraits seront obtenus. Cela est complètement différent des résultats de l'extracteur connu de l'état de la technique au moyen duquel on obtenait un nombre aléatoire de poins extraits, puisqu'on extrayait tous les points entre deux seuils, et que le nombre de ces points variait grandement selon la valeur de chacun des seuils.

En référence avec la figure 6a, dans la méthode mise en oeuvre par le dispositif selon l'invention, on notera :

$M_D$ = la moyenne du signal à droite d'un pixel donné considéré sur un axe parallèle à Y'Y et orienté de droite à gauche,

$P_G$ = la pente (ou dérivée) du signal à gauche du même pixel.

Pour obtenir un critère de discrimination du pixel correspondant exactement au bord droit $CT_D$ du contour du disque terrestre comme montré sur la figure 6a, on peut utiliser par exemple une combinaision linéaire des données $M_D$ et $P_G$. Ou bien encore une combinaison géométrique de ces données.

Une combinaison linéaire possible s'exprimera par :
le critère

$$C_1 \;=\; a\,P_G\,[p] - b\,M_G\,[m] \qquad (1$$

dans la formule duquel :
- a est un coefficient ainsi que b de cette combinaison linéaire ; ces coefficients sont dits de "dosage" ;
- $P_G$ [p] est la pente à gauche définie précédemment considérée mesurée sur un support de filtre mathématique de dimension p ;
- $M_D$ [m] est la moyenne à droite définie précédemment et considérée mesurée sur un support de filtre mathématique de dimension m.

Une combinaison géométrique possible peut être exprimée par le critère :

$$Gg \;=\; P_G\,[p]^a \,/\, M_D\,[m]^b \qquad (2)$$

Ce critère est constitué par le rapport de deux grandeurs élevées à une certaine puissance.

Les deux combinaisons $C_1$ et $C_g$ peuvent être ramenées à une formule unique du fait que, puisque l'on ne va retenir que le maximum du critère choisi, toute fonction monotone des critères suggérés plus haut engendre d'autres possibilités de critères tout aussi valables pour résoudre le problème technique posé.

On choisira de préférence un critère fondé sur le Log de la combinaison géométrique citée, qui s'exprime par la formule :

$$C \;=\; a\,\mathrm{Log}\,P_G\,[p] - b\,\mathrm{Log}\,M_D\,[m] \qquad (3)$$

On obtient ainsi un critère qui répond parfaitement aux conditions définies plus haut puisque le Log est une fonction monotone. La formulation fournie pour le critère C montre que les deux critères proposés a priori peuvent en réalité être exprimés sous la forme d'un critère unique :

$$C \;=\; f\,(P_G\,[p]) - kf\,(M_D\,[m]) \qquad (4)$$

Dans cette formulation, la fonction f est une fonction scalaire qui s'applique sur une seule grandeur. A titre d'exemple de réalisation, ces fonctions seront mise en oeuvre en utilisant des tables de codage (en anglais L.U.T : LOOK UP TABLE).

Ainsi, pour réaliser une combinaison géométrique, on met en oeuvre les fonctions f au moyen de tables de codage qui correspondent à la fonction Log. Pour réaliser une combinaison linéaire, on met en oeuvre les fonctions f au moyen de tables de codage qui correspondent à une fonction affine. Dans l'un et l'autre cas, on réalise ensuite une combinaison linéaire de ces deux fonctions.

Le critère C proposé constitue donc une formulation particulièrement avantageuse, car, avec cette formulation unique on obtient une formulation très générale permettant plusieurs types de dosage.

On va maintenant exposer les caractéristiques des supports [p] et [m] pour calculer les moyennes et les pentes. Par support de filtre, on entend les dimensions, ou encore le nombre de pixels sur lesquels on effectue la dérivée (pente) ou la moyenne.

Toujours en référence avec la figure 6a, nous examinons tout d'abord les problèmes qui se posent concernant l'établissement des caractéristiques des filtres mathématiques impliqués dans le calcul de la pente des signaux relatifs à la droite de chaque pixel considéré. Plusieurs cas peuvent se produire en ce qui concerne la position du pixel correspondant, sur une ligne Y'Y donnée, au bord du disque terrestre.

Tout d'abord, si ce bord $CT_D$ de disque est simplement situé sur un continent, la pente correspondant aux niveaux de gris à gauche sera importante, et les dimensions du filtre mathématique à utiliser pourraient être assez grandes.

Mais si au contraire, ce bord $CT_D$ de disque est situé sur un océan, la pente des niveaux de gris va d'abord augmenter, à cause de l'atmosphère, au fur et à mesure que l'on considère des pixels en se déplaçant de droite à gauche ; puis, dû au noir, ou aux niveaux de gris très bas dans la zone de l'océan, on trouvera une pente à gauche faible, ce qui induira en erreur si l'on a choisi un filtre mathématique de grand support ou de grandes dimensions.

Il est donc préférable de choisir un filtre mathématique de petit support ou petites dimensions [p].

Nous examinons maintenant les problèmes qui se posent concernant l'établissement des caractéristiques des filtres mathématiques impliqués dans le calcul de la moyenne des signaux relatifs à la droite de chaque pixel considéré. Plusieurs cas peuvent également se produire.

A droite du pixel A correspondant au contour $CT_D$ du disque terrestre, se trouve le noir sidéral en ES, donc la moyenne $M_D$ des signaux à droite pourrait a priori être évaluée aussi bien au moyen d'un filtre de grand ou de petit support [m].

Les tests ont cependant montré que cette alternative n'existait pas. En effet, si le calcul est effectué au moyen d'un filtre de grand support, on obtient ce que l'homme du métier appelle une bonne détection, c'est-à-dire que l'on n'obtient pas de points dans l'intérieur du disque terrestre, où la présence de très grandes zones très sombres est très peu probable. Mais du fait du très grand support, on réalise la moyenne sur de nombreux points (par exemple 50 pixels) d'où il résulte que l'on aura tendance à occulter le signal correspondant au pied de la transition Espace-Terre.

Ainsi, on pourra être déjà délocalisé de plusieurs pixels vers l'intérieur du disque terrestre avant de reconnaître l'influence de signaux relatifs à la transition recherchée. Il en résultera une mauvaise localisation du bord du disque terrestre due à l'utilisation d'un grand support pour le calcul de la moyenne.

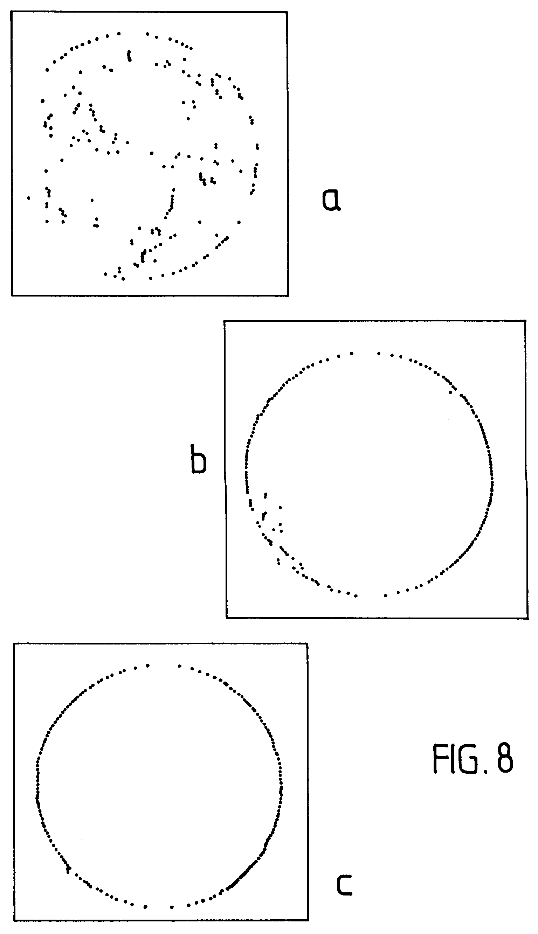

Donc pour le calcul de la moyenne, l'utilisation d'un filtre de grand support signifie bonne détection et mauvaise localisation. Cette démonstration est illustrée par la figure 8b qui montre les pixels des bords droit et gauche de la Terre extraits lors des balayages en lignes parallèles à $\overrightarrow{Y'Y}$ (figure 6a) et $\overrightarrow{X'X}$ (figure 6b) lorsque le support pour le calcul des moyennes est grand. Cette figure 8b montre les points extraits, relativement aux bords droit et gauche du disque terrestre, en utilisant le critère formulé selon la relation (4) c'est-à-dire en n'effectuant qu'une seule moyenne sur un grand support de 30 pixels. On constate à l'observation de cette figure 8b, que certains points, bien que très nets ne sont pas situés sur le contour du disque. Ce sont en réalisé des points du contour qui ont été bien détectés, mais mal localisés.

Inversement, si pour le calcul de la moyenne, on utilise un filtre mathématique de petit support, par exemple 3 pixels, les signaux relatifs à chacun des 3 pixels seront très significatifs. Pour avoir la moyenne basse recherchée, il faudra vraiment que chacun des signaux soit individuellement d'un faible niveau de gris. Donc, dans ce cas, la localisation du bord de Terre sera excellente. Par contre, à l'intérieur du disque terrestre, les transitions océan-continent, ou nuage-océan conduiront à des moyennes très faibles sur de tels petits support, ce qui pourra conduire à des détections incorrectes. Cette démonstration est illustrée par la figure 8a qui montre les pixels des bords droit et gauche de la Terre extraits lors de balayages en lignes parallèles $\overrightarrow{Y'Y}$ et $\overrightarrow{X'X}$ lorsque le support pour le calcul des moyennes est petit. Cette figure 8a montre les points extraits, relativement aux bords droit et gauche du disque terrestre, en utilisant le critère formulé selon la relation (4), c'est-à-dire en n'effectuant qu'une seule moyenne sur un petit support de 2 pixels. On constate à l'observation de cette figure 8a, que certains points du contour sont absents parce que le maximum du critère a été détecté à l'intérieur du disque.

Sur les figures autres que la figure 4, c'est-à-dire sur les figures 6, 7, 8 et 9, on a représenté les pixels détectés en noir sur fond blanc, et non pas le contraire, ceci dans un but de réalisation simplifiée des figures. De ce fait l'intérieur du disque terrestre et l'espace intersidéral qui devraient être noirs, sont représentés en blanc.

Le critère proposé jusqu'ici se heurte donc au dilemme suivant : la réalisation d'une moyenne sur un grand support conduit à une bonne détection et à une mauvaise localisation, alors que la réalisation d'une moyenne sur un petit support conduit à une mauvaise détection et à une bonne localisation.

Or, on s'est fixé pour but d'obtenir à la fois une bonne localisation du bord du disque terrestre et une bonne détection de ce bord.

Selon l'invention, ce problème est résolu en réalisant d'abord le calcul de la moyenne sur un petit support, puis en pondérant le résultat par un calcul de la moyenne sur un grand support.

La formulation (4) du critère C choisi devient maintenant :

$$C = f(P_G [p]) - k_1 f(M_D [m_1]) - k_2 f(M_D [m_2]) \qquad (5)$$

Selon l'invention, on réalise donc un seul calcul de pente $P_G$ à gauche sur un petit support [p], c'est-à-dire sur quelques pixels (par exemple 1 à 5), puis deux calculs de moyenne $M_D$ à droite, l'un sur un petit support [$m_1$] de quelques pixels (par exemple 1 à 5), et l'autre sur un grand support [$m_2$] d'une dizaine ou quelques dizaines de pixels (par exemple 20 pixels).

Les résultats obtenus par la mise en oeuvre du critère C selon la formulation (5) sont très bons. En comparaison avec les figures 8a et 8b qui illustrent le compromis entre détection et localisation, la figure 8c montre le résultat obtenu également par simples balayages horizontaux parallèlement à $\overrightarrow{XX}$ et $\overrightarrow{YY}$ en effectuant chaque fois les deux calculs préconisés pour la moyenne.

Cette figure 8c qui illustre le résultat obtenu en utilisant maintenant le critère formulé selon la relation (5), montre que les points relatifs au contour du disque terrestre, sont à la fois bien détectés, et bien localisés. Pour la mise en oeuvre du critère conduisant à la figure 8c, on a utilisé lors des calculs de la moyenne un petit support [$m_1$] de 2 pixels, et un grand support [$m_2$] de 30 pixels.

Cette figure 8c montre que le résultat obtenu en combinant le moyenne sur un support de [2] avec la moyenne sur un support de [30] est très bon. Ainsi, on réalise le moyenne sur le support de [2], ce qui fournit les points de la périphérie sauf quelques uns non détectés comme sur la figure 8a, puis on pondère par la moyenne sur le support de [30] ce qui permet la détection, cette fois bien localisée des points non détectés précédemment.

On vient de montrer l'application du procédé mis en oeuvre dans l'extracteur selon l'invention, dans le première phase d'analyse des signaux des lignes de le droite vers la gauche horizontalement, parallèlement à l'axe $\overrightarrow{YY}$ de la figure 6a.

Il est ensuite nécessaire de renouveler toutes les opérations selon les 3 autres axes montrés sur la figure 5. Il faut alors remplacer gauche par droite dans un premier temps, c'est-à-dire :
- effectuer les moyennes à gauche et non plus à droite
- calculer les pentes à droite et non plus à gauche, puis remplacer ces qualificatifs par haut et bas, et ensuite bas et haut respectivement lors de l'étude des colonnes.

Ces opérations sont illustrées par les figures 6e à 6d. D'une manière générale, chaque pixel extrait est un pixel dont le valeur de niveau de gris maximise un critère C qui est calculé pour chacun des pixels d'une droite coupant la transition fond-objet une fois au moins, ce critère prenant en compte pour chaque calcul relatif à un pixel de le droite, eu moins :
- d'une part, une valeur de la moyenne M des niveaux de gris calculée sur un certain nombre [m] de pixels disposés de manière edjacente sur ladite droite orientée dans une direction centrifuge (CF) par rapport à l'objet, et à partir du pixel considéré,
- d'autre part, une valeur de la dérivée (pente) P des niveaux de gris calculée sur un certain nombre [p] de pixels disposés de manière adjacente sur ladite droite orientée dans une direction centripète (CP), par rapport à l'objet, et à partir du pixel considéré.

En désignant centrifuge par la référence CF et centripète par la référence CP, le critère C pourra alors être écrit :

$$C = f(P_{CP} [p]) - k_1 f(M_{CF} [m_1]) - k_2 f(M_{CF} [m_2]) \qquad (5bis)$$

Ainsi d'une manière générale, le calcul du critère C pour chaque pixel de ladite droite coupant la transition, inclut :
- le calcul d'une valeur de la moyenne M sur un dit premier nombre [$m_1$] de pixels adjacents dans la direction centrifuge (CF) sur ladite droite à partir du pixel considéré,
- le calcul d'une valeur de la moyenne M sur un dit second nombre [$m_2$] de pixels adjacents dans la direction centrifuge (CF) sur ladite droite à partir du pixel considéré,

- le calcul d'une valeur de la dérivé (pente) P sur un dit troisième nombre [p] de pixels adjacents dans la direction centripète (CP) sur ladite droite à partir du pixel considéré,

le résultat de chacun des calculs est affecté d'un coefficient dit de dosage, qui peut être zéro, si la non participation du résultat correspondant est requise.

A la suite de l'extraction, on obtient donc une image de la Terre telle que représentée sur la figure 7b dont les contours sont extrêmement bien localisés, si l'on considère par comparaison les résultats de l'extraction de l'état de la technique représentés sur la figure 7a, qui a été faite à partir de la même image originale que la figure 7b, par exemple l'image originale présentée schématiquement sur la figure 4. L'image de la figure 7a comporte des quantités de points non voulus sur les îles et les continents. On constatera que, du fait du seuillage, ces points extraits non voulus coïncident avec les zones blanches ou claires de la figure 4. (Pour la simplicité de la représentation, ces points extraits sont en noir sur fond blanc). De plus, on constate qu'un quart de la périphérie est manquante.

Les points extraits correspondant au contour CT de la Terre vont être utilisés dans l'étape suivante d'identification du centre de la Terre qui est relativement compliquée. Pour que le dispositif selon l'invention remplisse les trois conditions énoncées au début de cet exposé (précision, cadence, matériel embarquable) il faut que l'on ait à la fois :

- le plus de points possibles détectés à la pêriphérie CT de la Terre, pour obtenir l'identification du centre la plus précise possible, la précision étant fortement dépendante du nombre de points extraits [PRECISION] ;
- le moins de points possibles, pour diminuer le temps de calcul de l'identification du centre, dans l'étape ultérieure [CADENCE].

Un facteur important à prendre en compte est relatif au rapport suivant :

R = Nombre de points correspondant au contour/Nombre de points extraits au total     (6)

Selon l'invention, le rapport R (6) sera 100 fois plus élevé que selon l'état de la technique, car non seulement toute la périphérie est extraite, mais encore le nombre total des points extraits est faible du fait que les points sont très peu nombreux à l'intérieur du disque. Le temps de calcul relatifs au centre de la Terre (identification) sera donc diminué, en même temps que l'identification sera plus aisée et plus précise.

## Cas où l'objet d'origine se réduit à une courbe

Dans le cas où l'objet est vu davantage comme une courbe que comme une surface (objet filiforme, ou cas de la Terre vue en contrejour, avec un halo, on peut alors utiliser le dispositif décrit plus haut pour réaliser le traitement de cet objet.

On se trouve dans le cas où l'on observe du noir de part et d'autre d'un halo ou contour lumineux. En suivant la méthode développée plus haut, on effectue un premier traitement au moyen d'un balayage par ligne parallèlement à $\overrightarrow{YY}$ comme énoncé précédemment. Le point d'intersection entre une telle ligne de traitement et le contour, est caractérisé en ce qu'une forte pente P (dérivée) de signal peut être observée de part et d'autre de ce point.

Le critère préconisé dans ce cas revient à maximiser le mélange de ces deux pentes. On propose à cet effet, pour l'extraction d'un bord droit, comme sur la figure 6a, une formulation (7) d'un critère :

$$C_H = f(P_D [p]) + f(P_G [p])     (7)$$

Dans le cas du halo, le critère C contient donc deux pentes, mais ne contient plus de termes relatifs à la moyenne comme précédemment pour le critère C relatif au cas général (5bis). Le critère $C_H$ relatif au cas du halo peut inclure une combinaison linéaire ou bien géométrique dans laquelle la fonction f est définie de la même manière que dans (5bis). Afin de gérer les signes des pentes de manière appropriée à éliminer les incohérences dans les résultats, on éliminera la possibilité d'avoir en même temps deux pentes négatives.

L'exploitation du critère $C_H$ relatif au cas du halo est faite en cohérence avec ce qui a été défini dans le cas général :

- l'utilisation de la fonction f est la même ;
- le support [p] de chacun des calculs des pentes a les mêmes caractéristiques que le support utilisé précédemment pour le calcul du critère C relatif au cas général ; on choisira des supports faibles de quelques pixels.

D'une manière générale, pour tenir compte du cas possible de halo qui intervient dès que le soleil est occulté par la Terre, on généralisera le critère C de la relation (5bis) en :

$$C = \alpha_1 f(P_{CP}[p]) - \alpha_2 f(P_{CF}[p]) - k_1 f(H_{CF}[m_1]) - k_2 f(M_{CF}[m_2]) \quad (5\,ter)$$

Dans le cas du halo, on peut ainsi avoir $\alpha_1 = \alpha_2 = 1$, et $k_1 = k_2 = 0$, et sans halo $\alpha_2 = 0$, $\alpha_1 = 1$, et $k_1$ et $k_2$, qui sont des coefficients de dosage déjà décrits.

## Dispositif fonctionnel mettant en oeuvre le critère C

Le critère C peut être mis en oeuvre par le dispositif extracteur représenté sous forme de blocs fonctionnels sur la figure 3.

Ce dispositif comprend d'abord trois blocs référencés FL1, FL2, FL3, qui reçoivent chacun d'une part les coordonnées i, j de chaque pixel d'une ligne ou colonne considérée de la matrice de la figure 2 sous la forme d'un signal $S_i$, $S_j$ et d'autre part, un signal $I_{i,j}$ proportionnel à la valeur du niveau de gris de ces pixels.

La première opération effectuée par le dispositif de la figure 3 est le calcul des pentes P et des moyennes M. L'intérêt des opérateurs définis par le critère C, est que la pente et les moyennes sont des opérateurs linéaires. Ces opérateurs peuvent donc être réalisés par des filtres mathématiques linéaires. Comme d'autre part, on travaille ligne après ligne (ou colonne après colonne) des filtres linéaires sont en outre monodimensionnels.

On peut donc utiliser des filtres du commerce qui sont très rapides et qui permettent en particulier de traiter un pixel en moins de 100 nanosecondes (nSec).

On affecte un filtre FL1 au calcul de la moyenne sur un support $[m_1]$

un filtre FL2 au calul de la moyenne sur un support $[m_2]$.

un filtre FL3 au calcul de la pente.

Ces filtres peuvent être programmés une fois pour toutes. Mais aussi, on peut, une fois le dispositif embarqué sur un engin spatial (satellite) modifier l'étendue des supports $m_1$, $m_2$ et p par téléchargement, ainsi que des coefficients spécifiques au calcul de pente et de moyenne relativement à chaque filtre. On peut aussi modifier par téléchargement, les coefficients de dosage, c'est-à-dire $\alpha_1$, $\alpha_2$, $k_1$, $k_2$, par exemple au moyen d'un signal $E_{COEF}$.

Les sorties des filtres FL1, FL2, FL3 sont appliquées ensuite sur des tables de codage référencées respectivement LUT1, LUT2, LUT3 (en anglais LOOK-UP-TABLE). On affectera par exemple à LUT1 et à LUT2, qui font suite respectivement aux filtres FL1 et FL2 de calcul de la moyenne, les fonctions $-k_1 f$ et $-k_2 f$ respectivement, alors qu'on affectera à LUT3, qui correspond au filtre FL3 de calcul de pente, la fonction f.

D'une manière générale, pour un système extracteuridentificateur embarqué, on ne réalise pas les tables de codage par programmation d'un processeur, mais au moyen de mémoires programmables.

Les sorties des blocs référencés LUT1, LUT2, LUT3, sont portées dans un additionneur cablé référencé ADD sur la figure 3.

La sortie de l'additionneur ADD ainsi que l'entrée $S_i$, $S_j$ sont portées dans le bloc MAX qui réalise la comparaison des valeurs du critère C obtenues relativement à chacun des pixels de la ligne étudiée, et qui fournit les coordonnées du pixel correspondant au maximum trouvé ainsi que la valeur de ce maximum.

Cette mesure ou triplet ($C_{MAX}$, i, j) est stockée dans un bloc mémoire référencé MEM en vue du traitement ultérieur, qui dans le cas de la Terre est l'identification.

Pour chaque ligne dans un sens, on enregistrera un tel triplet ($C_{MAX}$, i,j), ce qui permet de construire l'image du contour de la Terre d'abord à droite, puis à gauche et enfin en haut et en bas.

Dans le cas où l'on veut traiter le phénomène de halo, on peut prévoir un filtre linéaire FL4 supplémentaire pour le calcul de la seconde pente, associé à une LUT4 dont la sortie est reportée comme déjà dit sur l'additionneur ADD câblé.

L'extracteur de contour représenté schématiquement sur la figure 3 montre donc 4 chaînes (1, 2, 3, 4) comprenant chacune un filtre FL et une LUT.

Pour l'application à un senseur de Terre, il faut prendre en compte que selon l'heure de la journée, la Terre se présente soit comme un disque montrant les océans, les continents, les nuages tel que représenté sur la figure 4, soit comme un disque noir avec un halo sous certaines conditions d'éclairage qui se produisent lorsque le soleil est proche de minuit. En fonction de l'heure, l'engin spatial muni du senseur de Terre peut être muni d'un dispositif d'indication de l'état "Pleine Terre", ou de l'état "halo", qui télécharge lui-même les coefficients des filtres linéaires FL1, FL2, FL3, FL4 de manière appropriée. Une simple horloge suffit à remplir cette fonction. Si on se trouve dans l'état "pleine terre", le dispositif d'indication de l'état de la Terre téléchargera un coefficient O affecté à la LUT4, comme dit précédemment, et si on se trouve dans l'état "halo" alors ce sont les coefficients des LUT1 et LUT2 qui seront égaux à zéro.

A l'issue des calculs réalisés par l'extracteur représenté shématiquement sur la figure 3, un dispositif d'identification permettra d'obtenir les coordonnées du centre O du cercle le plus proche du contour de la Terre obtenu précédemment.

L'extracteur représenté sur la figure 3 a été décrit en détail dans son application à la détermination du contour du disque terrestre. Mais cette application n'est pas exclusive ; cet extracteur de contour peut être appliqué à toute image dont on veut obtenir le contour. Un tel extracteur est notamment utile dans le traitement des images médicales.

Des variantes de l'invention sont possibles. Notamment, dans le cas où l'on n'a pas simultanément des objets filiformes (cas halo) et des objets pleins (cas pleine Terre), deux filtres suffisent à traiter les objets filiformes et trois filtres suffisent à traiter les objets pleins. De cette manière, dans tous les cas, un dispositif avec trois filtres, suivis de 3 LUT permet de réaliser le traitement.

D'autre part, dans le cas où l'on peut supporter une mise en oeuvre plus lourde (HARDWARE), les filtres monodimensionnels peuvent être remplacés par des filtres bidimensionnels, de faible épaisseur. Les moyennes et pentes sont alors évaluées sur des bandeaux et non plus sur des lignes. Ce qui, dans le cas d'un objet dont le contour évolue lentement, augmente le pouvoir de détection du dispositif.

D'une manière générale, selon l'invention, chaque pixel extrait est un pixel dont la valeur de niveau de gris maximise un critère C qui est calculé pour chacun des pixels d'une droite coupant la transition fond-objet au moins une fois, ce calcul étant effectué en mettant en oeuvre des moyens de filtrage linéaire (FL1, FL2... FLn) répartis sur une pluralité de chaînes (1, 2,..., n), dont au moins une première partie vise à mesurer l'augmentation des valeurs de niveau de gris dans le sens centripète par rapport à l'objet, à partir du pixel sur lequel le calcul du critère est effectué, dont éventuellement une seconde partie vise à mesurer l'uniformité des valeurs de niveau de gris dans le sens centrifuge, et/ou dont éventuellement une troisième partie vise à mesurer l'augmentation des valeurs de niveau de gris dans le sens centrifuge, ledit calcul étant effectué en outre en portant les résultats respectifs des moyens de filtrage (FL1, FL2... FLn) sur des moyens de tabulation (LUT1, LUT2, LUTn), lesquels appliquent une fonction scalaire (f) sur chacun de ces résultats pour doser les différentes mesures effectuées par chacun des filtres linéaires, et en portant les différentes mesures prélevées à la sortie des moyens de tabulation de chacune des chaînes (1, 2,... n) sur des moyens d'addition (ADD) pour réaliser la fusion de ces mesures.

Des moyens MAX réalisent la comparaison du résultat des moyens d'addition (ADD) pour chaque pixel de chaque droite coupant la transition fond-objet, et la sélection des coordonnées i,j des pixels correspondant aux maxima de ces résultats.

Pour mesurer l'augmentation des valeurs de niveau de gris, la première partie des moyens de filtrage et éventuellement la troisième partie calcule(nt) la dérivée d'un signal I(i,j) fonction desdites valeurs, et pour mesurer l'uniformité desdites valeurs, la seconde partie des moyens de filtrage calcule la moyenne pondérée d'un signal I(i,j) fonction desdites valeurs.

Dans les moyens de tabulations (LUT1, LUT2... LUTn), la fonction scalaire (f) est choisie proportionnelle à une fonction affine correspondant à une combinaison linéaire des mesures réalisée par les moyens d'addition (ADD), ou bien à une fonction logarithme correspondant à une combinaison géométrique des mesures réalisée par lesdits moyens d'addition (ADD).

## Revendications

1. Dispositif de traitement d'image du type extracteur de contour, pour délivrer les coordonnées de pixels extraits situés à la transition fond-objet dans une image qui représente un objet sur un fond substantiellement uniforme, et qui est constituée de pixels (P(i,j)) repérés par leurs coordonnées (i,j) dans un référentiel matriciel et affectés chacun d'un niveau de luminance, ce dispositif comprenant :
   - des moyens de définition d'une pluralité de lignes de traitement (X'X, Y'Y, T'T, Z'Z), balayant l'image à traiter et coupant la transition fond-objet,
   - des moyens d'évaluation (FL, LUT), pour chaque pixel courant de chaque ligne de traitement, d'un critère C qui est une fonction du niveau de luminance de ce pixel,
   - des moyens de détermination (MAX) du maximum ($C_{MAX}$)dudit critère C pour chaque ligne de traitement, et des moyens de sélection (MEM) des pixels qui correspondent aux maxima du critère C pour toutes les lignes, et de stockage de leurs coordonnées (i,j), en tant que pixels extraits, et ce dispositif comprenant en outre, dans les moyens d'évaluation du critère C :
   - des chaînes de traitement (1...n) ayant respectivement des moyens de calcul de grandeurs relatives aux variations du niveau de luminance des pixels, dans des ensembles associés respectivement à chaque pixel courant et composés chacun d'un nombre ([m],[p]) donné de pixels adjacents ordonnés sur la même ligne de traitement que le pixel courant, et à partir de ce dernier, soit en direction de l'objet, soit en direction du fond de l'image,
- et des moyens d'addition (ADD) de ces grandeurs.

2. Dispositif de traitement d'image, selon la revendication 1, caractérisé en ce que les moyens d'évaluation du critère C comprennent :
- au moins une chaîne de traitement (1,2) ayant des moyens de calcul pour fournir des mesures relatives à l'uniformité du niveau de luminance des pixels dans des ensembles associés respectivement à chaque pixel courant et composés chacun d'un nombre ([m1],[m2]) donné de pixels adjacents ordonnés sur la même ligne de traitement que le pixel courant, et à partir de ce dernier, en direction du fond de l'image,
- et au moins une chaîne de traitement (3,4) ayant des moyens de calcul pour fournir des mesures relatives à l'augmentation du niveau de luminance des pixels dans des ensembles associés respectivement à chaque pixel courant et composés chacun d'un nombre ([p]) donné de pixels adjacents ordonnés sur la même ligne de traitement que le pixel courant, et à partir de ce dernier, soit en direction du fond de l'image, soit en direction de l'objet,
les résultats des calculs effectués par les différentes chaînes étant fournis aux moyens d'addition (ADD).

3. Dispositif de traitement d'image selon la revendication 2, caractérisé en ce que les moyens d'évaluation du critère C comprennent :
- une première chaîne de traitement (1), dans laquelle des mesures relatives à l'uniformité sont obtenues par des moyens de calcul (FL1, LUT1) de la moyenne pondérée (k1.M[m1]) d'un signal (I(i,j)) fonction des valeurs de luminance des pixels de dits premiers ensembles associés respectivement à chaque pixel courant et composés chacun d'un premier nombre ([m1]) de pixels adjacents ordonnés sur la même ligne de traitement que le pixel courant, et à partir de ce dernier, en direction du fond de l'image,
- une seconde chaîne de traitement (2), dans laquelle des mesures relatives à l'uniformité sont obtenues par des moyens de calcul (FL2, LUT2) de la moyenne pondérée (k2.M[m2]) d'un signal (I(i,j)) fonction des valeurs de luminance des pixels de dits seconds ensembles associés respectivement à chaque pixel courant et composés chacun d'un second nombre ([m2]) de pixels adjacents ordonnés sur la même ligne de traitement que le pixel courant, et à partir de ce dernier, en direction du fond de l'image, le second nombre ([m2]) de pixels des seconds ensembles étant supérieur au premier nombre ([m1]) de pixels des premiers ensembles,
- une troisième chaîne de traitement dans laquelle des mesures relatives à l'augmentation du niveau de luminance sont obtenues par des moyens de calcul (FL3, LUT3) de la dérivée (P[p1]) d'un signal (I(ij)) fonction des valeurs de luminance des pixels de dits troisièmes ensembles associés respectivement à chaque pixel courant, composés chacun d'un troisième nombre [p1] de pixels adjacents ordonnés sur la même ligne de traitement que le pixel courant et à partir de ce dernier en direction de l'objet.

4. Dispositif selon la revendication 3, caractérisé en ce que les moyens d'évaluation du critère C comprennent en outre:
- une quatrième chaîne de traitement dans laquelle les mesures relatives à l'augmentation du niveau de luminance sont obenues par des moyens (FL4, LUT4) de calcul de la dérivée (P[p2]) d'un signal (I(ij)) fonction des valeurs de luminance des pixels dedits quatrièmes ensembles associés respectivement à chaque pixel courant, composés chacun d'un quatrième nombre [p2] de pixels adjacents ordonnés sur la même ligne de traitement que le pixel courant, et à partir de ce dernier en direction du fond de l'image, le quatrième nombre ([p2]) de pixels des quatrièmes ensembles étant éventuellement égal au troisième nombre de pixels ([p1]) des troisièmes ensembles.

5. Dispositif selon la revendication 4, caractérisé en ce que dans chaque chaîne, les moyens de calcul comprennent respectivement :
- un filtre linéaire (FL1, FL2, FL3, FL4) qui mesure les variations des valeurs de luminance dans les ensembles de pixels associés à chaque pixel courant, et qui a pour étendue un nombre de pixels correspondant au nombre de pixels contenus dans ces ensembles,

- des moyens de tabulation (LUT1, LUT2, LUT3, LUT4) (ou tables de codage) qui appliquent une fonction scalaire (f) sur chaque sortie des filtres linéaires pour doser les différentes mesures effectuées par les filtres linéaires,

les résultats des calculs effectués par les moyens de tabulation étant fournis aux moyens d'addition (ADD).

6. Dispositif selon l'une des revendication 3 à 5, caractérisé en ce que:
   - dans la première chaîne, le filtre linéaire (FL1) a une petite étendue ([m1]) par exemple 1 à 5 pixels et dans la deuxième chaîne une grande étendue ([m2]) par exemple 10 à 30 pixels,
   - dans la troisième, et éventuellement dans la quatrième chaîne, le(s) filtre(s) linéaire(s) (FL3, FL4), a (ont) une petite étendue ([p1], [p2]) par exemple 1 à 5 pixels.

7. Dispositif selon l'une des revendications 4 à 6, caractérisé en ce que, dans les moyens de tabulations (LUT1, LUT2, LUT3, LUT4, la fonction scalaire (f) est proportionnelle à une fonction affine, et en ce que, dans ce cas, les moyens d' addition (ADD), qui reçoivent les sorties des moyens de tabulations (LUT1, LUT2, LUT3, LUT4) des différentes chaînes, fournissent une combinaison linéaire des mesures.

8. Dispositif selon l'une des revendications 4 à 6, caractérisé en ce que, dans les moyens de tabulations (LUT1, LUT2, LUT3, LUT4), la fonction scalaire (f) est proportionnelle à une fonction logarithmique, et en ce que, dans ce cas, les moyens d'addition (ADD), qui reçoivent les sorties des moyens de tabulations des différentes chaînes, fournissent une combinaison géométrique des mesures.

FIG.1

FIG.2

FIG. 3

E.S

C.T

D.T.

T.R.

FIG. 4

LU

T'

D.T.

C.T.

T

Y    A_G    A    A_D    Y'

X'    X

E.S

Z

FIG. 5

T.R.

Z'

FIG. 6

a

b

FIG.7

FIG. 8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | SIGNAL PROCESSING IV: THEORIES & APPLICATIONS, 8 Septembre 1988, GRENOBLE, FRANCE<br>pages 1633 - 1636<br>WIDO MENHARDT ET MARTIN IMME 'Contour Detection Using Fuzzy Sets.'<br>* page 1634, alinéa "Direction";<br>page1635, alinéas "Detection of initial points" ,"Cost function" * | 1-8 | G06F15/68 |
| A | COMPUTERS IN CARDIOLOGY, 26 Septembre 1990, CHICAGO, USA<br>pages 443 - 446<br>K.P.PHILIP ET AL. 'Automatic Detection of Left  Ventricular Endocardium in Cardiac Images.'<br>* page 444, alinéa "ALGORITHM" * | 1 | |
| A | FR-A-2 623 642 (THOMSON-RECHERCHE)<br>* abrégé *<br>* page 1, ligne 11 - page 1, ligne 24 *<br>* page 14, ligne 13 - page 14, ligne 30 *<br>* page 17, ligne 7 - page 17, ligne 35 * | | |

**DOMAINES TECHNIQUES RECHERCHES (Int. Cl.5 )**

G06F

Le présent rapport a été établi pour toutes les revendications

| Lieu de la recherche | Date d'achèvement de la recherche | Examinateur |
|---|---|---|
| LA HAYE | 07 SEPTEMBRE 1993 | GONZALEZ ORDONEZ O. |

EPO FORM 1503 03.82 (P0402)